# EUROPÄISCHE PATENTSCHRIFT

(11) **EP 3 596 807 B1**
(45) Veröffentlichungstag und Bekanntmachung des Hinweises auf die Patenterteilung: **24.02.2021**
(21) Anmeldenummer: 18710759.4
(22) Anmeldetag: 07.03.2018
(51) Int. Cl.: H02K 7/06, H02K 7/116, H02K 11/24

(54) **SPINDELANTRIEB, AUFWEISEND EINEN ELEKTROMOTOR UND EINEN VON DEM ELEKTROMOTOR ANGETRIEBENEN SPINDELTRIEB, UND VERFAHREN ZUM BETREIBEN EINES SPINDELANTRIEBS**
SPINDLE DRIVE WITH SHAFT JOINT, COMPRISING AN ELECTRIC MOTOR AND AN ELECTRIC MOTOR DRIVEN SPINDLE DRIVE, AND METHOD FOR OPERATION OF A SPINDLE DRIVE WITH SHAFT JOINT
ENTRAÎNEMENT À BROCHE, COMPORTANT UN MOTEUR ÉLECTRIQUE ET UN MÉCANISME À BROCHE ENTRAÎNÉ PAR UN MOTEUR ÉLECTRIQUE, ET PROCÉDÉ POUR L'OPERATION D'UN ENTRAÎNEMENT À BROCHE

(30) Priorität: 13.03.2017 DE 102017002329
(43) Veröffentlichungstag der Anmeldung: 22.01.2020
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2018/025057
(87) Internationale Veröffentlichungsnummer: WO 2018/166658

(56) Entgegenhaltungen:
- EP-A2- 1 795 987
- DE-A1-102009 050 359
- DE-A1-102014 224 257
- US-A1- 2014 288 776

## Beschreibung

Die Erfindung betrifft einen Spindelantrieb, aufweisend einen Elektromotor und einen von dem Elektromotor angetriebenen Spindeltrieb, und ein Verfahren zum Betreiben eines Spindelantriebs.

Es ist allgemein bekannt, dass ein Spindelantrieb als Linearantrieb verwendbar ist und mit seiner Kolbenstange eine Kraft auf eine anzutreibende Last ausübt.

**Aus der** DE 10 2014 224257 A1 **ist als nächstliegender Stand der Technik ein Linearaktuator bekannt, dessen Gehäuse mit Öl und Gas befüllt ist, wobei Öl und Gas unter Druck stehen.**

**Aus der** US 2014/288776 A1 **ist ein Hubkolben bekannt, der im Innenraum des Hubkolbens Druck erzeugt.**

**Aus der** EP 1 795 987 A2 **ist ein Aktuator mit Hubkolben bekannt, der ebenfalls im Innenraum des Hubkolbens Druck erzeugt.**

**Aus der** DE 10 2009 050359 A1 **ist ein Spindelmotor bekannt, dessen Innenraum Öl aufweist.**

Der Erfindung liegt daher die Aufgabe zugrunde, die Sicherheit bei Betrieb eines Spindelantriebs weiterzubilden.

Erfindungsgemäß wird die Aufgabe bei dem Spindelantrieb nach den in Anspruch 1 und bei dem Verfahren nach den in Anspruch 7 angegebenen Merkmalen gelöst.

Wichtige Merkmale der Erfindung bei dem Spindelantrieb sind, dass der Spindelantrieb einen Elektromotor und einen von dem Elektromotor angetriebenen Spindeltrieb aufweist,
wobei eine Rotorwelle des Elektromotors drehfest verbunden ist mit einer Spindel des Spindeltriebs, die in Wirkverbindung mit einer Spindelmutter des Spindeltriebs ist,
wobei die Spindelmutter drehfest, aber linear, insbesondere axial, bewegbar am Gehäuse, insbesondere am ein Gehäuseteil aufweisenden Gehäuse, des Spindeltriebs angeordnet ist,
wobei eine Kolbenstange mit der Spindelmutter verbunden ist, welche aus dem Spindeltrieb, insbesondere aus dem Gehäuse, insbesondere Gehäuseteil, herausragt,
wobei eine erste Dichtung zwischen Kolbenstange und Gehäuse, insbesondere Gehäuseteil, angeordnet ist
und dass eine weitere Dichtung, insbesondere Wellendichtring, zwischen Spindel und Gehäuse angeordnet ist,
so, dass der Innenraumbereich des Spindeltriebs druckdicht, insbesondere hermetisch abgeschlossen, ist gegenüber der Umgebung,
wobei der Spindelantrieb ein Mittel zur Erfassung des Drucks im Innenraumbereich des Spindeltriebs aufweist.

Von Vorteil ist dabei, dass zu jeder Linearposition der Spindelmutter und/oder Kolbenstange ein Druck erfassbar ist und somit bei Betrieb überwachbar ist, ob der Druck an der jeweiligen Position verringert ist. Somit ist bei einem detektierten Druckabfall ein Ölverlust erkennbar und eine Warnung anzeigbar, insbesondere akustisch, optisch oder elektronisch. Im einfachsten Fall wird also bei Inbetriebnahme der Druckverlauf als Funktion der Linearposition erfasst und die entsprechenden Werte abgespeichert. Dabei werden die Linearpositionen vorzugsweise derart langsam durchfahren, dass die Temperatur im Wesentlichen konstant bleibt. Somit ist dann jeder Position ein Druckwert zugeordnet. Diese Wertepaare sind abgespeichert. In Weiterbildung sind auch nur wenige Werte abgespeichert, wobei dann mittels Interpolation der gesamte Funktionsverlauf ermittelbar ist. Im späteren Betrieb werden dann die jeweils aktuell erfassten Druckwerte und Linearpositionswerte verglichen mit der durch Interpolation bestimmten Funktion. Somit ist bei einer kritischen Abweichung ein Ölverlust detektierbar.

Erfindungsgemäß ist das Mittel ein Drucksensor, welcher in dem Gehäuseteil des Spindeltriebs angeordnet ist und/oder welcher die Druckdifferenz zwischen dem Innenraumbereich und der Umgebung außerhalb des Innenraumbereichs des Spindeltriebs erfasst. Von Vorteil

Erfindungsgemäß ist der Innenraumbereich begrenzt durch das Gehäuse des Spindeltriebs und die Kolbenstange, so dass das Volumen des Innenraumbereichs von der Linearposition der Kolbenstange abhängt. Von Vorteil ist dabei, dass das Ölvolumen und somit der Ölstand in einfacher Weise bestimmbar und überwachbar ist.

Bei einer vorteilhaften Ausgestaltung ist der Innenraumbereich mittels der ersten Dichtung und der weiteren Dichtung hermetisch von der Umgebung des Spindeltriebs oder Spindelantriebs abgeschlossen. Von Vorteil ist dabei, dass der Druck im Innenraumbereich abhängt von der Linearposition der Kolbenstange, insbesondere wobei der Druck im Innenraumbereich eineindeutig abhängt von der Linearposition der Kolbenstange, wenn die Temperatur konstant ist. Somit ist aus den Druckwerten unter Berücksichtigung der Linearpositionen auf das Luftvolumen im Innenraumbereich und somit auf die Ölmenge im Innenraumbereich schließbar.

Bei einer vorteilhaften Ausgestaltung ist die Spindelmutter linear geführt im Spindeltrieb, insbesondere im Gehäuse des Spindeltriebs. Von Vorteil ist dabei, dass eine Linearführung einfach herstellbar ist.

Bei einer vorteilhaften Ausgestaltung ist die Rotorwelle mit der Spindel mittels einer Kupplung drehfest verbunden. Von Vorteil ist dabei, dass eine einfach herstellbare Verbindung verwendbar ist und Spindel und Rotorwelle zueinander einen herstellungsbedingten Fluchtungsfehler aufweisen dürfen.

Bei einer vorteilhaften Ausgestaltung ist das Mittel verbunden mit einer Auswerteeinheit, welche ein Warnsignal herausgebbar macht, insbesondere optisch, akustisch und/oder elektronisch. Von Vorteil ist dabei, dass Ölverlust detektierbar und anzeigbar ist.

Wichtige Merkmale bei dem Verfahren zum Betreiben eines Spindelantriebs sind, dass der Druck in einem Innenraumbereich des Spindelantriebs, insbesondere im Innenraumbereich des Spindeltriebs des Spindelantriebs, erfasst wird und in Abhängigkeit von dem Linearpositionsverlauf der Kolbenstange des Spindeltriebs ausgewertet wird zur Bestimmung des Ölvolumens, insbesondere Ölstands, im Spindeltrieb.

Von Vorteil ist dabei, dass aus den bei den jeweiligen Linearpositionen erfassten Druckwerten auf das Ölvolumen im Innenraumbereich schließbar ist. Somit ist eine Überwachung auf Ölverlust ausführbar und die Sicherheit somit verbesserbar.

Bei einer vorteilhaften Ausgestaltung wird bei Unterschreiten eines kritischen Wertes an Ölvolumen ein Warnsignal weitergeleitet oder angezeigt, insbesondere elektronisch, optisch und/oder akustisch. Von Vorteil ist dabei, dass eine Ölverlust detektierbar ist.

Bei einer vorteilhaften Ausgestaltung wird bei Inbetriebnahme zu jeder Linearposition, insbesondere der Kolbenstange, ein Druckwert erfasst und der Linearpositionswert zusammen mit dem zugeordneten Druckwert als Wertepaar abgespeichert, insbesondere in einem Speicher des den Elektromotor des Linearantriebs speisenden Wechselrichters,
wobei während des der Inbetriebnahme nachfolgenden Betriebs ein jeweils aktuell erfasster Druckwert samt dem aktuell zugehörigen Linearpositionswert verglichen wird mit den gespeicherten Wertepaaren und/oder mit einem aus den gespeicherten Werten durch Interpolation bestimmten Wertepaar. Von Vorteil ist dabei, dass bei einer kritischen Abweichung des Druckwertes ein Ölverlust detektierbar ist und somit eine Warnung weitermeldbar und/oder anzeigbar ist. Vorzugsweise ist ein Temperatursensor im Spindeltrieb angeordnet, so dass die Sicherheit der Bestimmung verbessert ist. Insbesondere sind nur erfasste Werte aus einem schmalen Temperaturbereich bei dem Verfahren verwendet und/oder zugelassen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

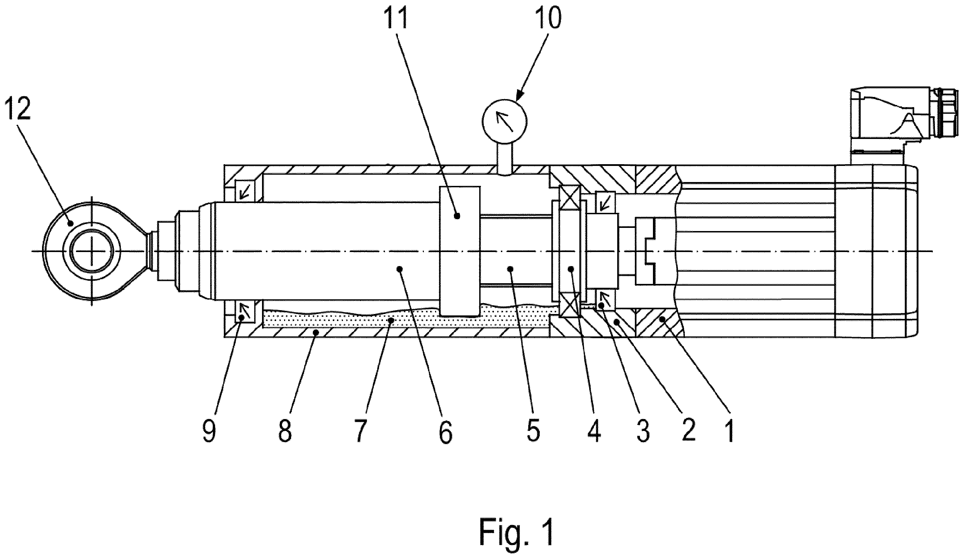

In der Figur 1 ist ein Querschnitt eines Linearantriebs gezeigt.

Wie in der Figur gezeigt, weist der Linearantrieb einen ölgeschmierten Spindeltrieb auf, der von einem Elektromotor angetrieben wird.

Der Elektromotor weist ein Statorgehäuse 1 auf, welches mit einem Adaptergehäuse 2 verbunden ist, welches mit einem Gehäuseteil 8 des Spindeltriebs verbunden ist. Das Adaptergehäuse 2 ist zwischen Statorgehäuse 1 und Gehäuseteil 8 angeordnet.

Eine zum Statorgehäuse 1 drehbar gelagerte Rotorwelle des Elektromotors ist drehfest mittels einer Kupplung 4 mit einer Spindel 6, insbesondere Gewindespindel, verbunden.

Im Adaptergehäuse 2 ist ein Wellendichtring 3 aufgenommen, welche die Spindel 5 zum Adaptergehäuse 2 hin abdichtet. Außerdem ist im Adaptergehäuse 2 ein Lager aufgenommen, mittels dessen die Spindel 5 und Kupplung 4, insbesondere Kupplungswelle, drehbar gelagert ist.

Die Spindel 5 ist mit der Spindelmutter 11 in Wirkverbindung, insbesondere in Schraubverbindung.

Dabei ist die Spindelmutter 11 mit einer Kolbenstange 6 fest verbunden, welche an ihrem von der Spindelmutter abgewandten axialen Endbereich ein Befestigungsmittel 12, insbesondere Gelenkkopf oder Öse, aufweist, welches drehfest, aber linear beweglich an einer Vorrichtung angeordnet ist. Somit schraubt sich die Spindelmutter 11 bei Drehbewegung der Spindel 5 in axialer Richtung, also linear, abhängig von der Drehrichtung vorwärts oder rückwärts.

Die Kolbenstange 6 ist im Gehäuseteil 8 des Spindeltriebs lineargelagert, insbesondere gleitgelagert, und mittels einer Dichtung 9 abgedichtet.

Erfindungsgemäß erfasst ein Drucksensor 10 den Druck im vom Gehäuseteil 8 umgebenen Innenraumbereich des Spindeltriebs, der mit Schmieröl teilweise gefüllt ist. Luft füllt den restlichen Freiraum im Innenraumbereich.

Das Luftvolumen des Innenraumbereichs ist mittels der Dichtung 9 zur Umgebung hin abgedichtet und mittels des Wellendichtrings 3 zum Motor hin. Somit ist die Luft des Innenraumbereichs getrennt von der äußeren Umgebung.

Da beim Ausfahren der Kolbenstange 6 das Volumen des Innenraumbereichs vergrößert wird und das Ölvolumen im Wesentlichen konstant bleibt, verändert sich der Druck.

Da die Bewegung der Kolbenstange 6 gesteuert wird und die zugehörige Winkelstellungsänderung der Steuerung bekannt ist, ist die entsprechende Änderung des gesamten Innenraumbereichs bekannt. Aus den erfassten Werten des Drucks unter Berücksichtigung der Positionsverläufe der Kolbenstange 6 wird der Anteil des Öls befüllten Volumens am Volumen des Innenraumbereichs bestimmt.

Somit ist die Ölbefüllung von einer Auswerteeinheit der Steuerung überwachbar. Wenn also im Betrieb ein Leck auftritt und somit der Ölstand abnimmt, ist dies mittels Auswertung des Verlaufs der Öldrucksensorsignale in Abhängigkeit von dem Verlauf der Positionen der Kolbenstange 6 detektierbar. Die Auswerteeinheit ist samt Steuerung als Teil einer elektronischen Schaltung eines Wechselrichters ausführbar, welcher den Elektromotor speist.

Bei einem weiteren erfindungsgemäßen Ausführungsbeispiel wird die Spindelmutter im Spindeltrieb lineargeführt, insbesondere im Gehäuseteil des Spindeltriebs. Somit wird die Spindelmutter nicht durch das Befestigungsmittel 12 an der Drehbewegung gehindert, sondern durch die Linearführung.

Bei einem weiteren erfindungsgemäßen Ausführungsbeispiel wird statt des Verlaufs der vom Sensor zur Druckerfassung der Verlauf des Drehmoments des Elektromotors bestimmt. Somit ist der zeitliche Verlauf der vom Linearantrieb erzeugten Kraft oder der zeitliche Verlauf des der Kraft entsprechenden Drehmoments bestimmbar und daraus der Druck bestimmbar. Dabei wird der bekannte Kraftverlauf der vom Linearantrieb angetriebenen Vorrichtung berücksichtigt.

### Bezugszeichenliste

- 1: Statorgehäuse des Elektromotors
- 2: Adaptergehäuse
- 3: Wellendichtring
- 4: Kupplung
- 5: Spindel, Gewindespindel
- 6: Kolbenstange
- 7: Öl
- 8: Gehäuseteil
- 9: Dichtung, insbesondere Lineardichtung
- 10: Drucksensor
- 11: Spindelmutter
- 12: Befestigungsmittel

## Patentansprüche

1. Spindelantrieb, aufweisend einen Elektromotor und einen von dem Elektromotor angetriebenen Spindeltrieb,
wobei eine Rotorwelle des Elektromotors drehfest mit einer Spindel (5) des Spindeltriebs verbunden ist, die in Wirkverbindung mit einer Spindelmutter (11) des Spindeltriebs ist,
wobei die Spindelmutter (11) drehfest, aber axial bewegbar am Gehäuse (2), insbesondere am ein Gehäuseteil (8) aufweisenden Gehäuse (2), des Spindeltriebs angeordnet ist,
wobei eine Kolbenstange (6) mit der Spindelmutter (11) verbunden ist, welche aus dem Gehäuse (2), insbesondere aus dem Gehäuseteil (8), des Spindeltriebs herausragt,
**wobei** eine erste Dichtung (9) zwischen Kolbenstange (6) und Gehäuse (2), insbesondere Gehäuseteil (8), des Spindeltriebs angeordnet ist
und dass eine weitere Dichtung (3) insbesondere Wellendichtring, zwischen Spindel und Gehäuse (2) des Spindeltriebs angeordnet ist,
so dass ein Innenraumbereich des Spindeltriebs, der durch das Gehäuse (2) des Spindeltriebs und durch die Kolbenstange (6) begrenzt ist, druckdicht, insbesondere hermetisch abgeschlossen, gegenüber einer Umgebung außerhalb des Innenraumbereichs des Spindeltriebs ist,
wobei der Spindelantrieb ein Mittel zur Erfassung des Drucks im Innenraumbereich des Spindeltriebs aufweist,
**dadurch gekennzeichnet, dass** das Mittel ein Drucksensor (10) ist, welcher in dem Gehäuseteil (8) des Spindeltriebs angeordnet ist und welcher die Druckdifferenz zwischen dem vom Gehäuseteil (8) umgebenen, mit einem Schmieröl teilweise gefüllten Innenraumbereich und der Umgebung außerhalb des Innenraumbereichs des Spindeltriebs erfasst.

2. Spindelantrieb nach Anspruch 1,
**dadurch gekennzeichnet, dass**
der Innenraumbereich durch das Gehäuse (2) des Spindeltriebs und die Kolbenstange (6) begrenzt ist, so dass das Volumen des Innenraumbereichs von der Linearposition der Kolbenstange (6) abhängt.

3. Spindelantrieb nach mindestens einem der vorangegangenen Ansprüche,
**dadurch gekennzeichnet, dass**
der Innenraumbereich mittels der ersten Dichtung (9) und der weiteren Dichtung (3) hermetisch von der Umgebung außerhalb des Innenraumbereichs des Spindeltriebs oder Spindelantriebs abgeschlossen ist.

4. Spindelantrieb nach mindestens einem der vorangegangenen Ansprüche,
**dadurch gekennzeichnet, dass**
die Spindelmutter (11) linear geführt ist im Spindeltrieb, insbesondere im Gehäuse (2) des Spindeltriebs.

5. Spindelantrieb nach mindestens einem der vorangegangenen Ansprüche,
**dadurch gekennzeichnet, dass**
die Rotorwelle mit der Spindel mittels einer Kupplung (4) drehfest verbunden ist.

6. Spindelantrieb nach mindestens einem der vorangegangenen Ansprüche,
**dadurch gekennzeichnet, dass**
das Mittel verbunden ist mit einer Auswerteeinheit, welche ein Warnsignal herausgebbar macht, insbesondere optisch, akustisch und/oder elektronisch.

7. Verfahren zum Betreiben eines Spindelantriebs, insbesondere nach mindestens einem der vorangegangenen Ansprüche,
**dadurch gekennzeichnet, dass**
der Druck im Innenraumbereich des Spindeltriebs des Spindelantriebs, der durch das Gehäuse (2) und durch die Kolbenstange (6) begrenzt ist,
von einem Drucksensor (10), welcher in dem Gehäuseteil (8) des Spindeltriebs angeordnet ist
und welcher die Druckdifferenz zwischen dem vom Gehäuseteil (8) umgebenen, mit Schmieröl teilweise gefüllten Innenraumbereich und der Umgebung außerhalb des Innenraumbereichs des Spindeltriebs erfasst,
erfasst wird und in Abhängigkeit von dem Linearpositionsverlauf der Kolbenstange (6) des Spindeltriebs zur Bestimmung des Ölvolumens, insbesondere Ölstands, im Spindeltrieb ausgewertet wird.

8. Verfahren nach mindestens einem der vorangegangenen Ansprüche,
**dadurch gekennzeichnet, dass**
bei Unterschreiten eines kritischen Wertes an Ölvolumen ein Warnsignal weitergeleitet oder angezeigt wird, insbesondere elektronisch, optisch und/oder akustisch.

9. Verfahren nach mindestens einem der vorangegangenen Ansprüche,
**dadurch gekennzeichnet, dass**
bei Inbetriebnahme zu jeder Linearposition, insbesondere der Kolbenstange (6), ein Druckwert erfasst wird und der Linearpositionswert zusammen mit dem zugeordneten Druckwert als Wertepaar abgespeichert wird, insbesondere in einem Speicher des den Elektromotor des Linearantriebs speisenden Wechselrichters,
wobei während des der Inbetriebnahme nachfolgenden Betriebs ein jeweils aktuell erfasster Druckwert samt dem aktuell zugehörigen Linearpositionswert mit den gespeicherten Wertepaaren und/oder mit einem aus den gespeicherten Werten durch Interpolation bestimmten Wertepaar verglichen wird.

## Claims

1. A spindle drive, having an electric motor and a spindle drive means driven by the electric motor,
wherein a rotor shaft of the electric motor is connected to a spindle (5) of the spindle drive means in a rotationally-fixed manner, which spindle is in an operative connection with a spindle nut (11) of the spindle drive means,
wherein the spindle nut (11) is arranged in a rotationally-fixed yet axially movable manner on the housing (2), in particular on the housing (2), having a housing part (8), of the spindle drive means,
wherein a piston rod (6) is connected to the spindle nut (11), which piston rod projects from the housing (2), in particular from the housing part (8), of the spindle drive means,
wherein a first seal (9) is arranged between piston rod (6) and housing (2), in particular housing part (8), of the spindle drive means,
and in that a further seal (3), in particular shaft-sealing ring, is arranged between spindle and housing (2) of the spindle drive means, so that an interior region of the spindle drive means, which region is bounded by the housing (2) of the spindle drive means and by the piston rod (6), is shut off in a pressure-tight manner, in particular hermetically, with respect to surroundings exterior to the interior region of the spindle drive means,
wherein the spindle drive has a means for detecting the pressure in the interior region of the spindle drive means,
**characterised in that** the means is a pressure sensor (10) which is arranged in the housing part (8) of the spindle drive means and which detects the pressure difference between the interior region, surrounded by the housing part (8) and partially filled with a lubricating oil, and the surroundings exterior to the interior region of the spindle drive means.

2. A spindle drive according to claim 1, **characterised in that** the interior region is bounded by the housing (2) of the spindle drive means and by the piston rod (6), so that the volume of the interior region depends on the linear position of the piston rod (6).

3. A spindle drive according to at least one of the preceding claims, **characterised in that** the interior region is hermetically shut off from the surroundings exterior to the interior region of the spindle drive means or spindle drive by means of the first seal (9) and the further seal (3).

4. A spindle drive according to at least one of the preceding claims, **characterised in that** the spindle nut (11) is linearly guided in the spindle drive means, in particular in the housing (2) of the spindle drive means.

5. A spindle drive according to at least one of the preceding claims, **characterised in that** the rotor shaft is connected to the spindle in a rotationally-fixed manner by means of a coupling (4).

6. A spindle drive according to at least one of the preceding claims, **characterised in that** the means is connected to an evaluation unit which renders an alarm signal emittable, in particular optically, acoustically and/or electronically.

7. A method of operating a spindle drive, in particular according to at least one of the preceding claims, **characterised in that** the pressure in the interior region of the spindle drive means of the spindle drive, which region is bounded by the housing (2) and by the piston rod (6), is detected by a pressure sensor (10), which is arranged in the housing part (8) of the spindle drive means and which detects the pressure difference between the interior region, surrounded by the housing part (8) and partially filled with lubricating oil, and the surroundings exterior to the interior region of the spindle drive means, and is evaluated dependent on the linear position course of the piston rod (6) of the spindle drive means in order to determine the oil volume, in particular oil level, in the spindle drive means.

8. A method according to at least one of the preceding claims, **characterised in that** an alarm signal is transmitted or displayed, in particular electronically, optically and/or acoustically, when there is a drop below a critical value of oil volume.

9. A method according to at least one of the preceding claims, **characterised in that** upon bringing into service at each linear position, in particular of the piston rod (6), a pressure value is detected and the linear position value together with the associated pressure value is stored as a value pair, in particular in a memory of the inverter supplying the electric motor of the linear drive,
wherein during the operation following the bringing into service, a pressure value currently detected in each case together with the currently associated linear position value is compared with the stored value pairs and/or with a value pair determined from the stored values by interpolation.

## Revendications

1. Entraînement à broche, présentant un moteur électrique et un mécanisme à broche entraîné par le moteur électrique,
un arbre de rotor du moteur électrique étant connecté de manière solidaire en rotation à une broche (5) du mécanisme à broche, laquelle est en liaison fonctionnelle avec un écrou de broche (11) du mécanisme à broche,
l'écrou de broche (11) étant disposé de manière solidaire en rotation, mais de manière déplaçable axialement, sur le boîtier (2), en particulier sur le boîtier (2) présentant une partie de boîtier (8), du mécanisme à broche,
une tige de piston (6) étant connectée à l'écrou de broche (11), laquelle fait saillie hors du boîtier (2), en particulier hors de la partie de boîtier (8), du mécanisme à broche,
un premier joint d'étanchéité (9) étant disposé entre la tige de piston (6) et le boîtier (2), en particulier la partie de boîtier (8), du mécanisme à broche,
et un joint d'étanchéité supplémentaire (3), en particulier un joint d'étanchéité d'arbre, étant disposé entre la broche et le boîtier (2) du mécanisme à broche,
de telle sorte qu'une région de l'espace intérieur du mécanisme à broche qui est limitée par le boîtier (2) du mécanisme à broche et par la tige de piston (6) soit fermée de manière étanche à la pression, en particulier hermétiquement, par rapport à un environnement à l'extérieur de la région de l'espace intérieur du mécanisme à broche,
l'entraînement à broche présentant un moyen pour détecter la pression dans la région de l'espace intérieur du mécanisme à broche,
**caractérisé en ce que**
le moyen est un capteur de pression (10) qui est disposé dans la partie de boîtier (8) du mécanisme à broche et qui détecte la différence de pression entre la région de l'espace intérieur enveloppée par la partie de boîtier (8), remplie en partie avec une huile de lubrification, et l'environnement à l'extérieur de la région de l'espace intérieur du mécanisme à broche.

2. Entraînement à broche selon la revendication 1,
**caractérisé en ce que**
la région de l'espace intérieur est limitée par le boîtier (2) du mécanisme à broche et par la tige de piston (6), de telle sorte que le volume de la région de l'espace intérieur dépend de la position linéaire de la tige de piston (6).

3. Entraînement à broche selon au moins l'une des revendications précédentes,
**caractérisé en ce que**
la région de l'espace intérieur est fermée hermétiquement au moyen du premier joint d'étanchéité (9) et du joint d'étanchéité supplémentaire (3) vis-à-vis de l'environnement à l'extérieur de la région de l'espace intérieur du mécanisme à broche ou de l'entraînement à broche.

4. Entraînement à broche selon au moins l'une des revendications précédentes,
**caractérisé en ce que**
l'écrou de broche (11) est guidé linéairement dans le mécanisme à broche, en particulier dans le boîtier (2) du mécanisme à broche.

5. Entraînement à broche selon au moins l'une des revendications précédentes,
**caractérisé en ce que**
l'arbre de rotor est connecté de manière solidaire en rotation à la broche au moyen d'un accouplement (4) .

6. Entraînement à broche selon au moins l'une des revendications précédentes,
**caractérisé en ce que**
le moyen est connecté à une unité d'évaluation par laquelle un signal d'avertissement peut être émis, en particulier de manière optique, acoustique et/ou électronique.

7. Procédé pour faire fonctionner un entraînement à broche, en particulier selon au moins l'une des revendications précédentes,
**caractérisé en ce que**
la pression dans la région de l'espace intérieur du mécanisme à broche de l'entraînement à broche, qui est limitée par le boîtier (2) et par la tige de piston (6), est détectée par un capteur de pression (10) qui est disposé dans la partie de boîtier (8) du mécanisme à broche et qui détecte la différence de pression entre la région de l'espace intérieur enveloppée par la partie de boîtier (8), remplie en partie avec de l'huile de lubrification, et l'environnement à l'extérieur de la région de l'espace intérieur du mécanisme à broche, et est évaluée en fonction de l'allure de la position linéaire de la tige de piston (6) du mécanisme à broche pour déterminer le volume, en particulier le niveau d'huile, dans le mécanisme à broche.

8. Procédé selon au moins l'une des revendications précédentes,
**caractérisé en ce**
**qu'**en dessous d'une valeur critique du volume d'huile, un signal d'avertissement est transmis ou affiché, en particulier de manière électronique, optique et/ou acoustique.

9. Procédé selon au moins l'une des revendications précédentes,
**caractérisé en ce que**
lors de la mise en service, pour chaque position linéaire, en particulier de la tige de piston (6), une valeur de pression est détectée et la valeur de position linéaire conjointement avec la valeur de pression associée est mémorisée en tant que paire de valeurs, en particulier dans une mémoire de l'onduleur alimentant le moteur électrique de l'entraînement linéaire,
pendant le fonctionnement suivant la mise en service, une valeur de pression respective détectée actuellement, conjointement avec la valeur de position linéaire actuellement associée, est comparée avec les paires de valeurs mémorisées et/ou avec une paire de valeurs déterminée par interpolation à partir des valeurs mémorisées.
